# EUROPEAN PATENT APPLICATION

(11) **EP 4 567 947 A1**
(43) Date of publication of application: **11.06.2025**
(21) Application number: 23913916.5
(22) Date of filing: 03.01.2023
(51) Int. Cl.: H01M 10/04

(54) **DEVICE FOR PUTTING INTO BOX**

(71) Applicant: Contemporary Amperex Technology Co., Limited, Fujian 352100 (CN)
(72) Inventor: QIU, Yudong, Ningde City, Fujian 352100 (CN); ZHAO, Weidong, Ningde City, Fujian 352100 (CN); LIANG, Gui, Ningde City, Fujian 352100 (CN); ZHAO, Bin, Ningde City, Fujian 352100 (CN)
(74) Representative: Thoma, Michael
(86) International application number: PCT/CN2023/070145
(87) International publication number: WO 2024/145754

(57) **Abstract**

Embodiments of the present application provide a boxing device, which is configured to place an article to be boxed into a box, with an opening of the box facing downwards. The boxing device includes: a bearing portion, wherein the bearing portion extends in a first direction and is located under the article to be boxed so as to bear the article to be boxed; a guiding portion, wherein the guiding portion extends in a second direction and is configured to limit the article to be boxed in a third direction; and a pressurizing portion, wherein the pressurizing portion is configured to limit the article to be boxed in the first direction, and the first direction, the second direction, and the third direction are perpendicular to one another. The technical solution of the present application can ensure that the article to be boxed can be safely boxed.

## Description

### Technical Field

The present application relates to the field of mechanical apparatuses, and in particular to a boxing device.

### Background Art

When an article to be boxed is being boxed, it is necessary to use a boxing device, which is, for example, a device for sucking the article to be boxed by means of a vacuum suction apparatus to move and box the article to be boxed. The boxing device has a wide application range in the field of industrial production and transportation.

With the development of modern industry, the technical requirements for boxing of articles to be boxed are getting higher and higher, which means that more boxing devices are required to meet the requirements of boxing of the articles to be boxed in different application scenarios. Therefore, how to improve the structure of a boxing device so as to ensure safe boxing of an article to be boxed is an urgent problem to be solved.

### Summary of the Invention

Embodiments of the present application provide a boxing device, which can ensure that an article to be boxed can be safely boxed.

In a first aspect, provided is a boxing device configured to place an article to be boxed into a box, with an opening of the box facing downwards. The boxing device comprises: a bearing portion, wherein the bearing portion extends in a first direction and is located under the article to be boxed so as to bear the article to be boxed; a guiding portion, wherein the guiding portion extends in a second direction and is configured to limit the article to be boxed in a third direction; and a pressurizing portion, wherein the pressurizing portion is configured to limit the article to be boxed in the first direction, and the first direction, the second direction, and the third direction are perpendicular to one another.

In the embodiments of the present application, the opening of the box faces downwards, and the boxing device places the article to be boxed into the box from the bottom of the box. The boxing device comprises the bearing portion, the guiding portion and the pressurizing portion, wherein the bearing portion extends in the first direction, is located under the article to be boxed and is configured to bear the article to be boxed; the guiding portion extends in the second direction and is configured to limit the article to be boxed in the third direction; and the pressurizing portion is configured to limit the article to be boxed in the first direction. In the technical solution of the present application, the bearing portion, the guiding portion and the pressurizing portion of the boxing device cooperate with one another to place the article to be boxed into the box from the bottom of the box. Specifically, the bearing portion bears the article to be boxed, and thus provides a supporting force for the article to be boxed in the process of placing the article to be boxed into the box; and the bearing portion extends in the first direction, which means that the size of the bearing portion can be adjusted according to the size of the article to be boxed, so that there is a large contact area between the bearing portion and the article to be boxed, providing sufficient supporting force for the article to be boxed, preventing the article to be boxed from falling off in the boxing process, and ensuring that the article to be boxed can be safely boxed. Moreover, the guiding portion and the pressurizing portion respectively limit the article to be boxed in the third direction and the first direction, so as to ensure that after the article to be boxed enters the box, a gap between said article and a wall or beam of the box is small, thereby increasing the utilization rate of an internal space of the box.

In a possible implementation, the pressurizing portion is provided with a groove for receiving an end portion of the bearing portion.

In the process of placing the article to be boxed into the box, the bearing portion moves in a direction approaching the box, and the end portion of the bearing portion is received in the groove of the pressurizing portion, so that the pressurizing portion is prevented from impeding a movement of the bearing portion when limiting the article to be boxed.

In a possible implementation, the boxing device further comprises a connecting portion. The connecting portion extends in the third direction and is configured to connect the bearing portion to the guiding portion.

The bearing portion and the guiding portion are connected to each other via the connecting portion, so that the structural integrity of the boxing device is enhanced, and the structural strength is improved.

In a possible implementation, the boxing device further comprises a box fixing portion configured to hang the box.

The box fixing portion hangs the box to fix the box above the article to be boxed, allowing said article to be placed into the box from the bottom of the box.

In a possible implementation, the box fixing portion is provided with a through hole, and the guiding portion is inserted into the through hole.

The box fixing portion is provided with the through hole, so that the guiding portion can be inserted into the through hole, avoiding the situation that the box fixing portion impedes a movement of the guiding portion when the guiding portion approaches the box.

In a possible implementation, the guiding portion is provided with a first fixing structure, the box fixing portion is provided with a second fixing structure, and the first fixing structure cooperates with the second fixing structure to fixedly connect the box fixing portion to the guiding portion.

The box fixing portion and the guiding portion are fixedly connected to each other by means of the cooperation of the first fixing structure and the second fixing structure, and the guiding portion is connected to the bearing portion via the connecting portion, that is, the box fixing portion, the guiding portion, the connecting portion and the bearing portion are connected as a whole, so that a positional change of the article to be boxed is avoided, and it is ensured that the article to be boxed can be stably placed into the box.

In a possible implementation, the first fixing structure is a positioning groove in the guiding portion, the second fixing structure is a positioning member provided on an upper surface of the box fixing portion, and the positioning member is snapped into the positioning groove to fixedly connect the box fixing portion to the guiding portion.

By snapping the positioning member into the positioning groove, the box fixing portion is fixedly connected to the guiding portion, thereby ensuring the connection stability and facilitating operation.

In a possible implementation, the positioning member comprises a rotatable positioning bar, and the positioning bar is rotated so as to be snapped into the positioning groove.

The positioning bar may rotate such that before the article to be boxed enters the box, the positioning bar is positioned to avoid the guiding portion, avoiding the situation that the positioning bar blocks the guiding portion from being inserted into the through hole of the box fixing portion. After the guiding portion is inserted into the through hole of the box fixing portion and the article to be boxed is placed into the box, the positioning bar is rotated so as to be snapped into the positioning groove of the guiding portion, so that the guiding portion is fixedly connected to the box fixing portion. The positioning bar may rotate such that before and after the article to be boxed is placed into the box, the positions of the positioning bar are different, so that the blocking of the movement of the guiding portion can be avoided, and the positioning bar can also cooperate with the positioning groove to fixedly connect the guiding portion to the box fixing portion, so as to facilitate the operation.

In a possible implementation, the boxing device comprises at least one pair of guiding portions. Each pair of guiding portions comprises two guiding portions opposite to each other in the third direction.

The pair of guiding portions comprises the two guiding portions opposite to each other in the third direction, so that the limiting of the article to be boxed in the third direction can be further ensured, that is, positions of two ends of the article to be boxed in the third direction are limited by the guiding portions, ensuring that the article to be boxed can be stably placed into the box.

In a possible implementation, the boxing device comprises two pairs of guiding portions arranged in the first direction.

The two pairs of guiding portions are arranged in the first direction, so that the article to be boxed can be better limited in the third direction, and the connection between the two pairs of guiding portions and the box fixing portion also ensures the overall connection stability of the boxing device. After the article to be boxed is placed in the box, the boxing device and the box need to be overturned, and the stable overall connection of the boxing device can ensure that the article to be boxed is stably placed in the box during overturning.

In a possible implementation, in the second direction, a distance L1 between the surface of the box fixing portion close to the box and an outer surface of a bottom wall of the box is 2 mm to 5 mm.

Since the surface of the box is not completely flat, if the box fixing portion is completely in contact with the outer surface of the box, the box fixing portion may be inclined, which is not conducive to hanging the box. In addition, an adhesive may sometimes be applied to the outer surface of the box, and if the box fixing portion is in contact with the outer surface of the box, the applied adhesive may be scratched, affecting the adhesion quality. However, the distance between the box fixing portion and the outer surface of the box should not be excessively large, otherwise, the box is prone to shaking when hanged to the box fixing portion. Therefore, the distance L1 between the surface of the box fixing portion close to the box and the outer surface of the bottom wall of the box is set to 2 mm to 5 mm.

In a possible implementation, in the third direction, the bearing portion has a width L2 ≥ 10 mm.

The width of the bearing portion should not be excessively small, otherwise, the contact area between the article to be boxed and the bearing portion is excessively small, a generated pressure is excessively large, the bearing effect of the bearing portion will be affected, the pressure borne by the article to be boxed will thus be excessively large, the article to be boxed will be damaged, and therefore the width L2 of the bearing portion is set to be greater than or equal to 10 mm.

In a possible implementation, the article to be boxed is a battery cell group comprising a plurality of battery cells, a first face of each battery cell faces the bearing portion, and an electrode terminal is provided on the first face; and the bearing portion is provided with an avoiding groove, and the electrode terminal is received in the avoiding groove.

When the article to be boxed is a battery cell group, the electrode terminal of the battery cell faces downwards, so that after the battery cell group is placed into the box and then overturned, the electrode terminal of the battery cell faces upwards, and the battery cell is placed upright. Moreover, the bearing portion is provided with the avoiding groove, and when the first face provided with the electrode terminal faces the bearing portion, the electrode terminal is received in the avoiding groove, thereby preventing the electrode terminal from being damaged by a force.

The boxing device provided in the embodiments of the present application is configured to place the article to be boxed into the box from the bottom of the box, with the opening of the box facing downwards. The boxing device comprises the bearing portion, the guiding portion and the pressurizing portion, wherein the bearing portion extends in the first direction, is located under the article to be boxed and is configured to bear the article to be boxed; the guiding portion extends in the second direction and is configured to limit the article to be boxed in the third direction; and the pressurizing portion is configured to limit the article to be boxed in the first direction. In the technical solution of the present application, the bearing portion, the guiding portion and the pressurizing portion of the boxing device cooperate with one another to place the article to be boxed into the box from the bottom of the box. Specifically, the bearing portion bears the article to be boxed, and thus provides a supporting force for the article to be boxed in the process of placing the article to be boxed into the box; and the bearing portion extends in the first direction, which means that the size of the bearing portion can be adjusted according to the size of the article to be boxed, so that there is a large contact area between the bearing portion and the article to be boxed, providing sufficient supporting force for the article to be boxed, preventing the article to be boxed from falling off in the boxing process, and ensuring that the article to be boxed can be safely boxed. Moreover, the guiding portion and the pressurizing portion respectively limit the article to be boxed in the third direction and the first direction, so as to ensure that after the article to be boxed enters the box, a gap between said article and a wall or beam of the box is small, thereby increasing the utilization rate of an internal space of the box.

### Brief Description of the Drawings

In order to illustrate the technical solutions of the embodiments of the present application more clearly, the drawings required in the description of the embodiments of the present application will be described briefly below. Obviously, the drawings described below are merely some embodiments of the present application, and for those of ordinary skill in the art, other drawings can also be obtained from these drawings without any creative efforts.
Fig. 1 is a schematic structural diagram of a vehicle disclosed in an embodiment of the present application;
Fig. 2 is a schematic exploded structural diagram of a battery disclosed in an embodiment of the present application;
Fig. 3 is a schematic exploded structural diagram of a battery cell disclosed in an embodiment of the present application;
Fig. 4 is a schematic structural diagram of a boxing device and an article to be boxed disclosed in an embodiment of the present application;
Fig. 5 is a schematic structural diagram of a boxing device and a battery cell group disclosed in an embodiment of the present application;
Fig. 6 is a schematic structural diagram of a boxing device and a battery cell group disclosed in an embodiment of the present application;
Fig. 7 is a cross-sectional view of a boxing device and a battery cell group disclosed in an embodiment of the present application; and
Fig. 8 is a cross-sectional view of a boxing device and a battery cell group disclosed in an embodiment of the present application.

In the accompanying drawings, the figures are not drawn to scale.

### List of reference signs:

1 - Vehicle; 10 - Battery; 30 - Controller; 40 - Motor;
11 - Box; 111 - Upper box body; 112 - Lower box body; 20 - Battery cell; 21 - Housing; 22 - Electrode assembly; 23 - Receiving space; 24 - End cap; 25 - Connecting member; 241 - Electrode terminal; 241a - Positive electrode terminal; 241b - Negative electrode terminal;
31 - Bearing portion; 32 - Guiding portion; 33 - Pressurizing portion; 34 - Connecting portion; 35 - Box fixing portion; 40 - Article to be boxed; 113 - First side wall; 114 - Second side wall; 211 - First face; 212 - Second face; 311 - Avoiding groove; 321 - Positioning groove; 331 - Groove; 351 - Through hole; 352 - Positioning member; 3211 - First positioning groove; 3212 - Second positioning groove; 3521 - Positioning bar.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example but should not be used to limit the scope of the present application. That is, the present application is not limited to the described embodiments.

In the description of the present application, it should be noted that "a plurality of" means two or more, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are used for descriptive purposes only, and should not be construed as indicating or implying the relative importance. The term "perpendicular" does not mean being perpendicular in the strict sense, but within an allowable range of errors. The term "parallel" does not mean being parallel in the strict sense, but within an allowable range of errors.

The orientation terms in the following description all indicate directions shown in the drawings, but do not limit the specific structure in the present application. In the description of the present application, it should also be noted that the terms "mounting", "connecting", and "connection" should be interpreted in the broad sense unless explicitly defined and limited otherwise. For example, the terms may mean a fixed connection, a detachable connection, or an integral connection, or may mean a direct connection, or an indirect connection by means of an intermediate medium. For those of ordinary skill in the art, the specific meanings of the terms mentioned above in the present application can be construed according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

Unless otherwise defined, all technical and scientific terms used in the present application have the same meanings as those commonly understood by those skilled in the art to which the present application belongs; The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment. Those skilled in the art should understand, in explicit and implicit manners, that the embodiments described in the present application may be combined with another embodiment.

In the embodiments of the present application, a battery cell may include a lithium ion battery, a lithium-sulfur battery, a sodium/lithium ion battery, a sodium ion battery or a magnesium ion battery, etc., which will not be limited in the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which will also not be limited in the embodiments of the present application.

A battery mentioned in the embodiments of the present application refers to a single physical module comprising one or more battery cells to provide a high voltage and capacity. For example, the battery mentioned in the present application may comprise a battery module, a battery pack, etc. The battery generally comprises a box for packaging one or more battery cells. The box can prevent liquid or other foreign matters from affecting charging or discharging of the battery cells.

In some battery packaging technologies, a plurality of battery cells may be first integrated into a battery module or a battery unit, and then the battery module or the battery unit is mounted in a battery box to form a battery pack. Moreover, in some other battery packaging technologies, a plurality of battery cells may also be directly mounted in a battery box to form a battery pack, and such a battery packaging technology may also be referred to as a cell to pack (CTP) packaging technology. In the CTP packaging technology, due to the fact that an intermediate structure, namely the battery module is omitted, the quality of the battery pack can be reduced, and the energy density of the battery can be improved. That is to say, in the process of battery packaging, the plurality of battery cells may directly form the battery, or may form a battery module or a battery unit first which then forms a battery. The battery is provided in a power consuming device to supply electric energy to the power consuming device.

The battery box in the embodiments of the present application is configured to receive a plurality of battery units, a busbar component, and other components of the battery. In some embodiments, a structure such as a beam for fixing the battery units may be further provided in the box. The box may be shaped depending on the plurality of battery units received. In some embodiments, the box may be a cube with six walls.

With the development of battery technologies, the requirements for a battery cell boxing technology are also getting higher and higher. For example, it is necessary to ensure that after the battery cells are placed into the box, a gap between the battery cells and a wall or beam of the box is small, so as to increase the utilization rate of an internal space of the box. For another example, when the plurality of battery cells are grouped and are placed into the box at the same time, due to the large weight of the battery cell group, it is necessary to ensure that the boxing device can provide a sufficient traction force during boxing, so as to ensure safe boxing of the battery cell group.

In some cases of the technology for boxing an article to be boxed, the article to be boxed is hanged to the boxing device such that the article to be boxed is moved and boxed. For example, a vacuum suction device is used to suck the article to be boxed, or a clamp is used to clamp the article to be boxed. Such a transportation method in which the boxing device hangs the article to be boxed has the risk of unstable sucking or clamping resulting in that the article to be boxed shakes or falls off from the boxing device, and also limits the weight of the article to be boxed to some extent.

In view of this, the inventors have proposed a boxing device configured to place an article to be boxed into a box from the bottom of the box. The boxing device comprises a bearing portion, a guiding portion and a pressurizing portion, wherein the bearing portion extends in a first direction, is located under the article to be boxed and is configured to bear the article to be boxed; the guiding portion extends in the second direction and is configured to limit the article to be boxed in the third direction; and the pressurizing portion is configured to limit the article to be boxed in the first direction. **In** the technical solution of the present application, the bearing portion, the guiding portion and the pressurizing portion of the boxing device cooperate with one another to place the article to be boxed into the box from the bottom of the box. Specifically, the bearing portion bears the article to be boxed, and thus provides a supporting force for the article to be boxed in the process of placing the article to be boxed into the box; and the bearing portion extends in the first direction, which means that the size of the bearing portion can be adjusted according to the size of the article to be boxed, so that there is a large contact area between the bearing portion and the article to be boxed, providing sufficient supporting force for the article to be boxed, preventing the article to be boxed from falling off in the boxing process, and ensuring that the article to be boxed can be safely boxed. Moreover, the guiding portion and the pressurizing portion respectively limit the article to be boxed in the third direction and the first direction, so as to ensure that after the article to be boxed enters the box, a gap between said article and a wall or beam of the box is small, thereby increasing the utilization rate of an internal space of the box.

The technical solutions described in the embodiments of the present application are applicable to a variety of devices, such as batteries, handcrafts, furniture products and toys, that are boxed by using the boxing device.

It should be understood that the technical solutions described in the embodiments of the present application are not limited to the devices mentioned above, but may also be applicable to all devices to be boxed by using the boxing device.

Taking a battery as an example, the boxing device is used to load the battery cell group into the box, so that the risk of battery cells falling off in the boxing process can be avoided, and the boxing safety of the battery cell group can be improved. **In** addition, since the boxing device can limit the battery cell group, it is ensured that the battery cell group can be placed into the box in close contact with the wall of the box or the beam in the box, or with a very small gap between the battery cell group and the wall or beam of the box, the utilization rate of the internal space of the box is increased, and the energy density of the battery is increased.

The technical solutions described in the embodiments of the present application are all applicable to various devices using a battery, such as mobile phones, portable apparatuses, laptops, battery cars, electric toys, electric tools, electric vehicles, ships, and spacecrafts. For example, the spacecrafts include airplanes, rockets, space shuttles, space vehicles, etc.

It should be understood that the technical solutions described in the embodiments of the present application are not only applicable to the apparatuses described above, but also applicable to all apparatuses using a battery. However, for the sake of brevity of description, the following embodiments will be described taking an electric vehicle as an example.

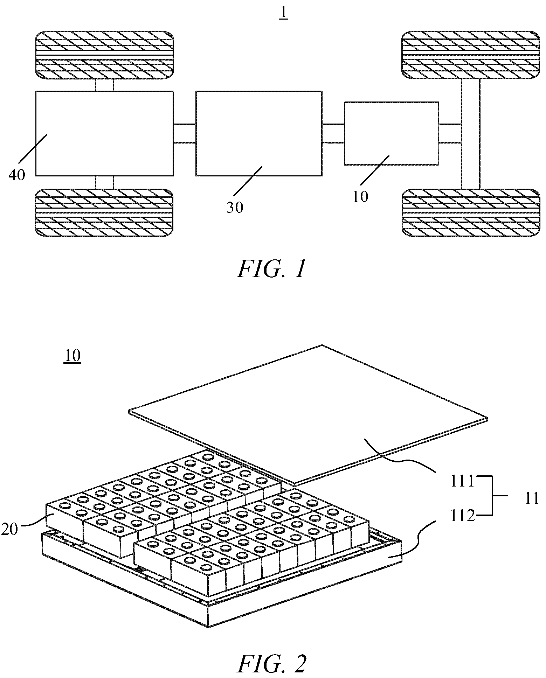

For example, Fig. 1 shows a schematic structural diagram of a vehicle 1 according to an embodiment of the present application. The vehicle 1 may be a fuel vehicle, a gas vehicle, or a new-energy vehicle. The new-energy vehicle may be a battery electric vehicle, a hybrid vehicle, an extended-range vehicle, etc. A motor 40, a controller 30 and a battery 10 may be provided inside the vehicle 1, and the controller 30 is configured to control the battery 10 to supply power to the motor 40. For example, the battery 10 may be provided at the bottom or the head or the tail of the vehicle 1. The battery 10 may be used to supply power to the vehicle 1. For example, the battery 10 can serve as a power source for operating the vehicle 1 for use in a circuit system of the vehicle 1, for example, to meet the working power demand of the vehicle 1 during startup, navigation and running. In another embodiment of the present application, the battery 10 can not only serve as an operating power source for the vehicle 1, but also serve as a driving power source for the vehicle 1, instead of or partially instead of fuel or natural gas, to provide driving power for the vehicle 1.

The battery 10 may comprise a plurality of battery cells in order to meet different power demands. For example, Fig. 2 is a schematic exploded structural diagram of a battery 10 in an embodiment of the present application. The battery 10 may comprise a plurality of battery cells 20. The number of the battery cells 20 may be set to any value depending on different power demands. The plurality of battery cells 20 may be in series connection, in parallel connection or in series-parallel connection to achieve higher capacity or power. Since each battery 10 may comprise a large number of the battery cells 20. For ease of mounting, the battery cells 20 may be provided in groups, and each group of battery cells 20 forms a battery module. The number of the battery cells 20 included in the battery module is not limited and may be set as required. The battery may comprise a plurality of battery modules that may be in series connection, in parallel connection or in series-parallel connection.

Optionally, the battery 10 may further comprise other structures. For example, the battery 10 may further comprise a busbar component for achieving the electric connection, such as parallel connection, series connection, or series-parallel connection, between the plurality of battery cells 20. Specifically, the busbar component may achieve the electrical connection between the battery cells 20 by connecting electrode terminals of the battery cells 20. Further, the busbar component may be fixed to the electrode terminals of the battery cells 20 by means of welding. The electric energy of the plurality of battery cells 20 may be further led out by means of an electrically conductive mechanism passing through the box. Optionally, the electrically conductive mechanism may also be a busbar component.

The battery 10 may further comprise a box 11 (or an enclosure). The interior of the box 11 is of a hollow structure, and the plurality of battery cells 20 are received in the box 11. As shown in Fig. 2, the box 11 may comprise two portions, referred to herein as an upper box body 111 and a lower box body 112 respectively. The upper box body 111 and the lower box body 112 are snap-fitted together. The upper box body 111 and the lower box body 112 may be shaped depending on the shape of a combination of the plurality of battery cells 20, and at least one of the upper box body 111 and the lower box body 112 has an opening. For example, only one of the upper box body 111 and the lower box body 112 included by the box 11 may be a hollow cuboid having an opening, and the other may be in the shape of a plate, so as to cover the opening. For example, as shown in Fig. 2, taking an example herein in which the lower box body 112 is a hollow cuboid and has only one open face, while the upper box body 111 is in the shape of a plate, the upper box body 111 covers the opening of the lower box body 112 to form the box 11 having a closed cavity. The cavity may be configured to receive the plurality of battery cells 20.

Optionally, the upper box body 111 and the lower box body 112 included by the box 11 in the embodiment of the present application may also have other shapes. For example, each of the upper box body 111 and the lower box body 112 may be a hollow cuboid and each has one open face, the opening of the upper box body 111 and the opening of the lower box body 112 are arranged opposite each other, and the upper box body 111 and the lower box body 112 are snap-fitted to each other to form the box 11 having a closed cavity. The plurality of battery cells 20 are combined in parallel connection or in series connection or in series-parallel connection and are then placed in the box formed by snap-fitting the upper box body 111 and the lower box body 112.

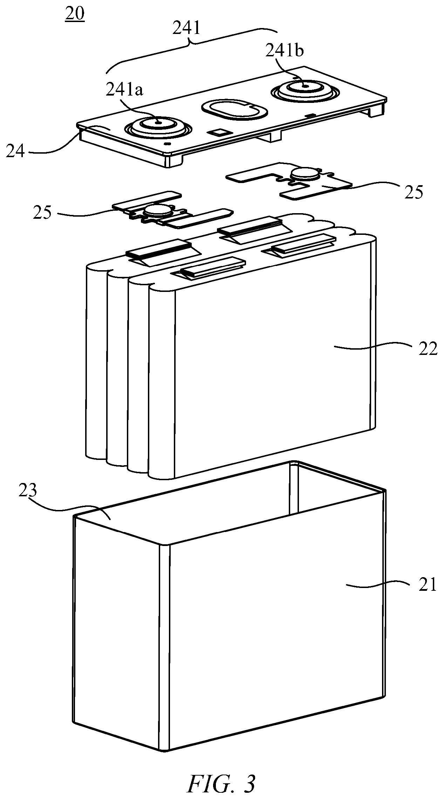

Fig. 3 shows a schematic structural diagram of a battery cell 20 according to an embodiment of the present application. The battery cell 20 comprises one or more electrode assemblies 22, a housing 21, and an end cap 24. The housing 21 and the end cap 24 form a shell or a battery case. Walls of the housing 21 and the end cap 24 are both referred to as walls of the battery cell 20. For a cuboid battery cell 20, the walls of the housing 21 include a bottom wall and four side walls, the bottom wall and the four side walls are connected to form a receiving space 23 in which the electrode assemblies 22 are placed. The housing 21 may be shaped according to the shape of a combination of the one or more electrode assemblies 22. For example, the housing 21 may be a hollow cuboid, cube or cylinder, and one of faces of the housing 21 has an opening such that the one or more electrode assemblies 22 can be placed in the housing 21. For example, when the housing 21 is a hollow cuboid or cube, one of flat faces of the housing 21 is an open face, that is to say, the flat face has no wall so that the inside of the housing 21 is in communication with the outside. When the housing 21 may be a hollow cylinder, an end face of the housing 21 is an open face. That is, this end face has no wall such that the inside of the housing 21 is in communication with the outside. The end cap 24 covers an opening of the receiving space 23 and is connected to the housing 21, so as to form a closed cavity in which the electrode assemblies 22 are placed. The housing 21 is filled with an electrolyte, such as an electrolytic solution and a solid electrolyte.

The battery cell 20 may further comprise two electrode terminals 241. The two electrode terminals 241 may be arranged on the end cap 24. The end cap 24 is generally in the form of a flat plate, the two electrode terminals 241 are fixed to a flat plate face of the end cap 24, and the two electrode terminals 241 are respectively a positive electrode terminal 241a and a negative electrode terminal 241b. Each electrode terminal 241 is correspondingly provided with a connecting member 25, which may be referred to as a current collecting member and is located between the end cap 24 and the electrode assembly 22 to achieve the electrical connection between the electrode assembly 22 and the electrode terminal 241.

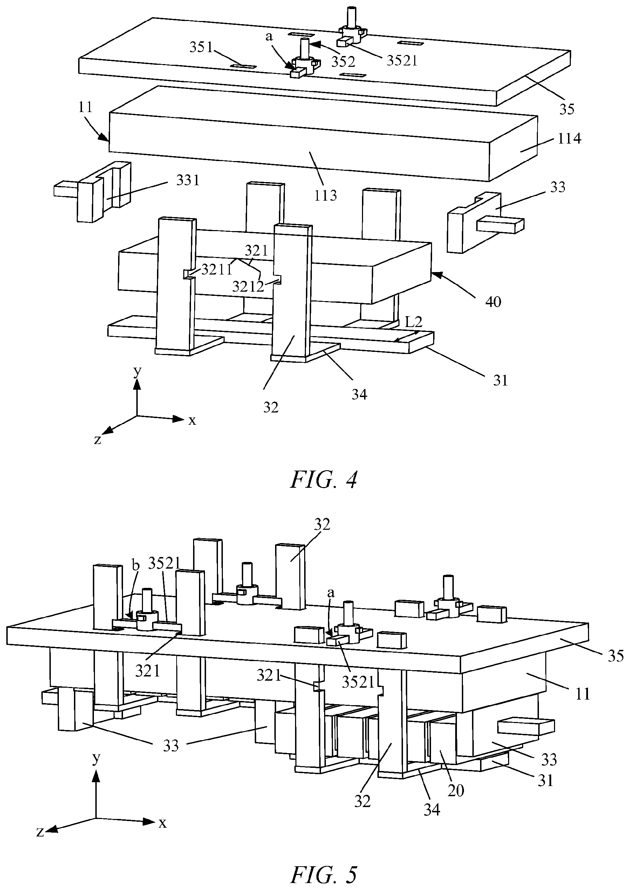

Fig. 4 is a scenario diagram of a boxing device placing an article to be boxed 40 into a box 11 according to an embodiment of the present application. The opening of the box 11 faces downwards, and the boxing device places the article to be boxed 40 into the box 11 from the bottom of the box 11.

Specifically, the boxing device comprises a bearing portion 31, a guiding portion 32, and a pressurizing portion 33. The bearing portion 31 extends in a first direction x, and the bearing portion 31 is located under the article to be boxed 40 so as to bear the article to be boxed 40. The guiding portion 32 extends in a second direction y, and the guiding portion 32 is configured to limit the article to be boxed 40 in a third direction z. The pressurizing portion 33 is configured to limit the article to be boxed 40 in the first direction x. The first direction x, the second direction y, and the third direction z are perpendicular to one another.

With reference to Fig. 4, the process of placing the article to be boxed 40 into the box 11 by the boxing device according to the embodiments of the present application is specifically described below. First, the bearing portion 31 bearing the article to be boxed 40 moves in a direction approaching the box 11, for example, in the y direction in Fig. 4 (the direction indicated by the arrow). Moreover, the guiding portion 32 limits the article to be boxed 40 in the third direction z. Specifically, the guiding portion 32 is close to an outer surface of a first side wall 113 of the box 11, such that the article to be boxed 40 may enter the box 11 in as close contact as possible with an inner surface of the first side wall 113 of the box 11. The pressurizing portion 33 limits the article to be boxed 40 in the first direction x. Specifically, the face of the pressurizing portion 33 close to the article to be boxed 40 is aligned with an inner surface of a second side wall 114 of the box 11 in the second direction y. When the bearing portion 31 bearing the article to be boxed 40 enters the box 11, the pressurizing portion 33 is blocked by the second side wall 114 of the box 11 and does not move along with the movement of the article to be boxed 40, and the article to be boxed 40 can move upwards gradually in close contact with one face of the pressurizing portion 33 and enter the box 11 in close contact with the inner surface of the second side wall 114 of the box 11. The guiding portion 32 and the pressurizing portion 33 limit the article to be boxed 40, so that the gap between the article to be boxed 40 and the wall of the box 11 is small after said article enters the box 11, thereby increasing the utilization rate of the internal space of the box 11.

It should be understood that, by the article to be boxed 40 entering the box 11 "in close contact with" the inner surface of the side wall of the box 11 described above, it is not meant that there is no gap between the article to be boxed 40 and the box 11, but the gap between the article to be boxed 40 and the box 11 is small and is within the range of allowable operation errors.

The materials of the bearing portion 31, the guiding portion 32 and the pressurizing portion 33 may be the same or different, for example, may be a steel, an aluminum, an alloy, a composite material, etc., which will not be limited in the present application.

The embodiments of the present application provide a boxing device which is configured to place the article to be boxed 40 into the box 11 from the bottom of the box 11, with the opening of the box 11 facing downwards. The boxing device comprises the bearing portion 31, the guiding portion 32, and the pressurizing portion 33. The bearing portion 31 extends in the first direction x, is located below the article to be boxed 40 and is configured to bear the article to be boxed 40. The guiding portion 32 extends in the second direction y and is configured to limit the article to be boxed 40 in the third direction z. The pressurizing portion 33 is configured to limit the article to be boxed 40 in the first direction x. In the technical solution of the present application, the bearing portion 31, the guiding portion 32 and the pressurizing portion 33 of the boxing device cooperate with one another to place the article to be boxed 40 into the box 11 from the bottom of the box 11. Specifically, the bearing portion 31 bears the article to be boxed 40, and thus provides a supporting force for the article to be boxed 40 in the process of placing the article to be boxed 40 into the box 11; and the bearing portion 31 extends in the first direction x, which means that the size of the bearing portion 31 can be adjusted according to the size of the article to be boxed 40, so that there is a large contact area between the bearing portion 31 and the article to be boxed 40, providing sufficient supporting force for the article to be boxed 40, preventing the article to be boxed 40 from falling off in the boxing process, and ensuring that the article to be boxed 40 can be safely boxed. Moreover, the guiding portion 32 and the pressurizing portion 33 respectively limit the article to be boxed 40 in the third direction z and the first direction x, so as to ensure that after the article to be boxed 40 enters the box 11, the gap between said article and the wall or beam of the box 11 is small, thereby increasing the utilization rate of the internal space of the box 11.

Optionally, in an embodiment of the present application, as shown in Fig. 4, the pressurizing portion 33 is provided with a groove 331 for receiving an end portion of the guiding portion 32.

Specifically, when the bearing portion 31 bearing the article to be boxed 40 enters the box 11, the face of the pressurizing portion 33 close to the article to be boxed 40 is aligned with the inner surface of the second side wall 114 of the box 11 in the second direction y, the pressurizing portion 33 is blocked by the second side wall 114 of the box 11 and does not move along with the movement of the article to be boxed 40, and the bearing portion 31 bearing the article to be boxed 40 continues to move upwards until the article to be boxed 40 is completely placed in the box 11. In this process, the pressurizing portion 33 is unchanged in position, is still tightly in contact with the article to be boxed 40 and limits the article to be boxed 40, but the position of the pressurizing portion 33 blocks the upward movement of the bearing portion 31 at this time. Therefore, the pressurizing portion 33 is provided with the groove 331, and the groove 331 matches the end portion of the bearing portion 31 in size, so that the end portion of the bearing portion 31 may be received in the groove 331 and move up and down in the groove 331, thereby preventing the pressurizing portion 33 from blocking the movement of the bearing portion 31.

In the embodiment of the present application, in the process of placing the article to be boxed 40 into the box 11, the bearing portion 31 moves in the direction approaching the box 11, and the end portion of the bearing portion 31 is received in the groove 331 of the pressurizing portion 33, so that the pressurizing portion 33 is prevented from impeding the movement of the bearing portion 31 when limiting the article to be boxed 40.

Optionally, in an embodiment of the present application, as shown in Fig. 4, the boxing device further comprises a connecting portion 34. The connecting portion 34 extends in the third direction z and is configured to connect the bearing portion 31 to the guiding portion 32.

In the embodiment of the present application, the bearing portion 31 and the guiding portion 32 are connected to each other via the connecting portion 34, so that the structural integrity of the boxing device is enhanced, and the structural strength is improved.

Optionally, the connecting portion 34 and the bearing portion 31 may be connected to each other by means of bonding, welding, riveting, etc. The connecting portion 34 and the guiding portion 32 may also be connected to each other by means of bonding, welding, riveting, etc., which will not be limited in the present application.

Optionally, the bearing portion 31, the guiding portion 32 and the connecting portion 34 may be integrally formed to reduce the machining time and improve the machining efficiency. The structural strength of the integrally formed structure is higher, and the overall structural stability of the boxing device is improved. The integrally formed structure of the bearing portion 31, the guiding portion 32 and the connecting portion 34 may be implemented by means of stamping, molding, etc., which will not be limited in the present application.

It should be understood that the bearing portion 31, the guiding portion 32, and the connecting portion 34 may also be separately machined and assembled, which will not be limited in the present application.

Optionally, in an embodiment of the present application, as shown in Fig. 4, the boxing device further comprises a box fixing portion 35 for hanging the box 11.

There are many implementations for hanging the box 11 by the box fixing portion 35. For example, the bottom wall of the box 11 is hanged to the box fixing portion 35; and for another example, two opposite side walls of the box 11 are hanged to the box fixing portion 35, which will not be limited in the present application.

In the embodiment of the present application, the box fixing portion 35 hangs the box 11 to fix the box 11 above the article to be boxed 40, so that the article to be boxed 40 is placed into the box 11 from the bottom of the box 11.

Optionally, in an embodiment of the present application, as shown in Fig. 4, the box fixing portion 35 is provided with a through hole 351, and the guiding portion 32 is inserted into the through hole 351.

In the embodiment of the present application, the box fixing portion 35 is provided with the through hole 351, so that the guiding portion 32 can be inserted into the through hole 351, avoiding the situation that the box fixing portion 35 impedes the movement of the guiding portion 32 when the guiding portion 32 approaches the box 11.

Optionally, in an embodiment of the present application, the guiding portion 32 is provided with a first fixing structure, the box fixing portion 35 is provided with a second fixing structure, and the first fixing structure cooperates with the second fixing structure to fixedly connect the box fixing portion 35 to the guiding portion 32.

In the embodiment of the present application, the box fixing portion 35 and the guiding portion 32 are fixedly connected to each other by means of the cooperation of the first fixing structure and the second fixing structure, and the guiding portion 32 is connected to the bearing portion 31 via the connecting portion 34, that is, the box fixing portion 35, the guiding portion 32, the connecting portion 34 and the bearing portion 31 are connected as a whole, so that a positional change of the article to be boxed 40 is avoided, and it is ensured that the article to be boxed 40 can be stably placed into the box 11.

Optionally, in an embodiment of the present application, as shown in Fig. 4, the first fixing structure is a positioning groove 321 in the guiding portion 32, the second fixing structure is a positioning member 352 provided on an upper surface of the box fixing portion 35, and the positioning member 352 is snapped into the positioning groove 321 to fixedly connect the box fixing portion 35 to the guiding portion 32. By snapping the positioning member 352 into the positioning groove 321, the box fixing portion 35 is fixedly connected to the guiding portion 32, thereby ensuring the connection stability and facilitating operation.

Specifically, the positioning member 352 comprises a rotatable positioning bar 3521. When the article to be boxed 40 is not completely placed into the box 11, the positioning bar 3521 is misaligned with the positioning groove 321, for example, the positioning bar 3521 is located at position a as shown in Figs. 4 and 5. After the article to be boxed 40 is completely placed into the box 11, the positioning bar 3521 is rotated such that the positioning bar 3521 is snapped into the positioning groove 321, for example, the positioning bar 3521 is located at position b shown in Fig. 5.

In the embodiment of the present application, the positioning bar 3521 may rotate such that before the article to be boxed 40 enters the box 11, the positioning bar 3521 is positioned to avoid the guiding portion 32, avoiding the situation that the positioning bar 3521 blocks the guiding portion 32 from being inserted into the through hole of the box fixing portion 35. After the guiding portion 32 is inserted into the through hole of the box fixing portion 35 and the article to be boxed 40 is placed into the box 11, the positioning bar 3521 is rotated so as to be snapped into the positioning groove 321 of the guiding portion 32, so that the guiding portion 32 is fixedly connected to the box fixing portion 35. The positioning bar 3521 may rotate such that before the article to be boxed 40 is placed into the box11 and after same is placed into the box11, the positions of the positioning bar 3521 are different, so that the blocking of the movement of the guiding portion 32 can be avoided, and the positioning bar can also cooperate with the positioning groove 321 to fixedly connect the guiding portion 32 to the box fixing portion 35, so as to facilitate the operation.

It should be understood that the first fixing structure being the positioning groove 321 and the second fixing structure being the positioning member 352 are merely an exemplary description of the embodiments of the present application, which does not limit the present application. For example, the first fixing structure and the second fixing structure may be mortise and tenon structures for matched connection. For another example, the first fixing structure and the second fixing structure may be a nut and a bolt for matched connection. This will not be limited in the present application.

Optionally, in an embodiment of the present application, the boxing device comprises at least one pair of guiding portions 32. Each pair of guiding portions 32 comprises two guiding portions 32 opposite to each other in the third direction z. The limiting of the article to be boxed 40 is limited in the third direction z can be further ensured, that is, positions of two ends of the article to be boxed 40 in the third direction z are limited by the guiding portions 32, ensuring that the article to be boxed 40 can be stably placed into the box 11.

Specifically, as shown in Fig. 4, the boxing device may comprise two pairs of guiding portions 32. The two pairs of guiding portions 32 are arranged in the first direction x.

In the embodiment of the present application, the two pairs of guiding portions 32 are arranged in the first direction x, so that the article to be boxed 40 can be better limited in the third direction z, and the connection between the two pairs of guiding portions 32 and the box fixing portion 35 also ensures the overall connection stability of the boxing device. After the article to be boxed 40 is placed in the box 11, the boxing device and the box 11 need to be overturned, and the stable overall connection of the boxing device can ensure that the article to be boxed 40 is stably placed in the box 11 during overturning.

Optionally, when the boxing device comprises two pairs of guiding portions 32, the positioning grooves 321 of the two guiding portions 32 located on the same side in the two pairs of guiding portions 32 are respectively formed on the sides of the two guiding portions 32 close to each other, namely, the first positioning groove 3211 and the second positioning groove 3212 as shown in Fig. 4. The first positioning groove 3211 and the second positioning groove 3212 correspond to the same positioning member 352, and after the positioning bar 3521 of the positioning member 352 is rotated, one part is snapped into the first positioning groove 3211, and the other part is snapped into the second positioning groove 3212.

Optionally, in an embodiment of the present application, in the second direction y, a distance L1 between the surface of the box fixing portion 35 close to the box 11 and the outer surface of the bottom wall of the box 11 is 2 mm to 5 mm. L1 may optionally be 2 mm, 3 mm, 4 mm, or 5 mm.

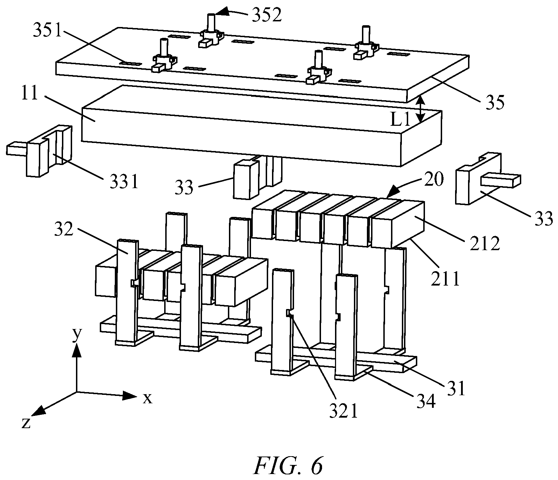

It should be understood that the surface of the box fixing portion 35 and the outer surface of the box 11 are not completely flat planes, so that a plane formed by a peripheral contour of the surface of the box fixing portion 35 close to the box 11 and a plane formed by a peripheral contour of the outer surface of the bottom wall of the box 11 are used as actual measurement planes. For example, as shown in Fig. 6, L1 represents the distance between the surface of the box fixing portion 35 close to the box 11 and the outer surface of the bottom wall of the box 11.

Since the surface of the box 11 is not completely flat, if the box fixing portion 35 is completely in contact with the outer surface of the box 11, the box fixing portion 35 may be inclined, which is not conducive to hanging the box 11. In addition, an adhesive may sometimes be applied to the outer surface of the box 11, and if the box fixing portion 35 is in contact with the outer surface of the box 11, the applied adhesive may be scratched, affecting the adhesion quality. However, the distance between the box fixing portion and the outer surface of the box should not be excessively large, otherwise, the box 11 is prone to shaking when hanged to the box fixing portion 35. Therefore, the distance L1 between the surface of the box fixing portion 35 close to the box 11 and the outer surface of the bottom wall of the box 11 is set to 2 mm to 5 mm.

Optionally, in an embodiment of the present application, as shown in Fig. 4, in the third direction z, the bearing portion 31 has a width L2 ≥ 10 mm.

The width of the bearing portion 31 should not be excessively small, otherwise, the contact area between the article to be boxed 40 and the bearing portion 31 is excessively small, a generated pressure is excessively large, the bearing effect of the bearing portion 31 will be affected, the pressure borne by the article to be boxed 40 will thus be excessively large, the article to be boxed 40 will be damaged, and therefore the width L2 of the bearing portion 31 is set to be greater than or equal to 10 mm.

Optionally, in an embodiment of the present application, the article to be boxed 40 may be a battery cell group. As shown in Figs. 5 and 6, the battery cell group comprises a plurality of battery cells 20 arranged in the first direction x.

In the embodiment of the present application, the boxing device loads the battery cell group into the box 11, so that the risk of the battery cells 20 falling off in the boxing process can be avoided, and the boxing safety of the battery cell group can be improved. In addition, since the boxing device can limit the battery cell group, it is ensured that the battery cell group can be placed into the box 11 in close contact with the wall of the box 11 or the beam in the box 11, or with a very small gap between the battery cell group and the wall or beam of the box 11, the utilization rate of the internal space of the box 11 is increased, and the energy density of the battery 10 is increased.

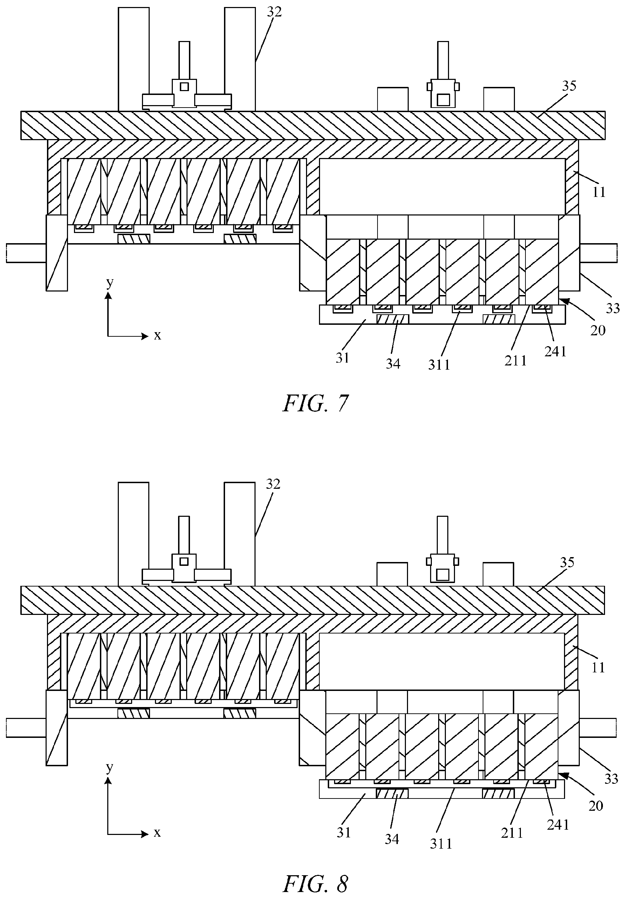

Specifically, as shown in Fig. 7, a first face 211 of the battery cell 20 faces the bearing portion 31, and the first face 211 is provided with an electrode terminal 241. The bearing portion 31 is provided with an avoiding groove 311, and the electrode terminal 241 is received in the avoiding groove 311.

When the article to be boxed 40 is a battery cell group, the electrode terminal 241 of the battery cell 20 faces downwards, so that after the battery cell group is placed into the box 11 and then overturned, the electrode terminal 241 of the battery cell 20 faces upwards, and the battery cell 20 is placed upright. Moreover, the bearing portion 31 is provided with the avoiding groove 311, and when the first face 211 provided with the electrode terminal 241 faces the bearing portion 31, the electrode terminal 241 is received in the avoiding groove 311, thereby preventing the electrode terminal 241 from being damaged by a force.

Optionally, as shown in Fig. 7, the avoiding groove 311 may be a plurality of discontinuous groove structures respectively corresponding to a plurality of electrode terminals 241. As shown in Fig. 8, the avoiding groove 311 may also be a continuous groove structure extending in the first direction x.

Optionally, in an embodiment of the present application, as shown in Fig. 6, the pressurizing portion 33 faces a second face 212 of the battery cell 20, and the second face 212 is a face of the battery cell 20 arranged oppositely in the first direction x.

The pressurizing portion 33 not only limits the battery cell group in the first direction x, but also applies a pressure to the battery cell group in the first direction x to compress and fix the size of the battery cell group in the first direction x to reach a predetermined size, such that the gaps between the plurality of battery cells in the battery cell group can be compressed, the plurality of battery cells can be tightly arranged and placed into the box 11, the utilization rate of the internal space of the box 11 can be increased, and the energy density of the battery 10 can be increased.

Optionally, in an embodiment of the present application, the second face 212 is a face with the largest surface area of the battery cell 20, and is commonly referred to as a "large face" of the battery cell 20. That is to say, the plurality of battery cells 20 in the battery cell group are arranged in the first direction x in an arrangement in which "large faces face each other", and the pressurizing portion 33 faces the "large face" of the battery cell 20, such that when pressurizing the battery cell group, the pressurizing portion 33 is in contact with the "large face" of the battery cell 20, the area of a contact face is large, and the pressure generated on the battery cell 20 is small. In addition, the pressurizing portion 33 faces the "large face" of the battery cell 20 rather than a side face of the battery cell 20 that has a small area and is provided with a water cooling pipe (not shown), so that the pressurizing portion 33 can be prevented from being in contact with the water cooling pipe when pressurizing the battery cell group, and damage to the water cooling pipe can be avoided.

While the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A boxing device configured to place an article to be boxed (40) into a box (11), with an opening of the box (11) facing downwards, **characterized by** comprising:
a bearing portion (31), wherein the bearing portion (31) extends in a first direction (x), and the bearing portion (31) is located under the article to be boxed (40) so as to bear the article to be boxed (40);
a guiding portion (32), wherein the guiding portion (32) extends in a second direction (y), and the guiding portion (32) is configured to limit the article to be boxed (40) in a third direction (z); and
a pressurizing portion (33), wherein the pressurizing portion (33) is configured to limit the article to be boxed (40) in the first direction (x), and the first direction (x), the second direction (y), and the third direction (z) are perpendicular to one another.

2. The boxing device according to claim 1, **characterized in that** the pressurizing portion (33) is provided with a groove (331) for receiving an end portion of the bearing portion (31).

3. The boxing device according to claim 1 or 2, **characterized by** further comprising a connecting portion (34), wherein the connecting portion (34) extends in the third direction (z) and is configured to connect the bearing portion (31) to the guiding portion (32).

4. The boxing device according to any one of claims 1 to 3, **characterized by** further comprising a box fixing portion (35) configured to hang the box (11).

5. The boxing device according to claim 4, **characterized in that** the box fixing portion (35) is provided with a through hole (351), and the guiding portion (32) is inserted into the through hole (351).

6. The boxing device according to claim 5, **characterized in that** the guiding portion (32) is provided with a first fixing structure, the box fixing portion (35) is provided with a second fixing structure, and the first fixing structure cooperates with the second fixing structure to fixedly connect the box fixing portion (35) to the guiding portion (32).

7. The boxing device according to claim 6, **characterized in that** the first fixing structure is a positioning groove (321) in the guiding portion (32), the second fixing structure is a positioning member (352) provided on an upper surface of the box fixing portion (35), and the positioning member (352) is snapped into the positioning groove (321) to fixedly connect the box fixing portion (35) to the guiding portion (32).

8. The boxing device according to claim 7, **characterized in that** the positioning member (352) comprises a rotatable positioning bar (3521), and the positioning bar (3521) is rotated so as to be snapped into the positioning groove (321).

9. The boxing device according to any one of claims 1 to 8, **characterized by** comprising at least one pair of guiding portions (32), wherein each pair of guiding portions (32) comprises two guiding portions (32) opposite to each other in the third direction (z).

10. The boxing device according to claim 9, **characterized by** comprising two pairs of guiding portions (32), wherein the two pairs of guiding portions (32) are arranged in the first direction (x).

11. The boxing device according to any one of claims 4 to 8, **characterized in that** in the second direction (y), a distance L1 between the surface of the box fixing portion (35) close to the box (11) and an outer surface of a bottom wall of the box (11) is 2 mm to 5 mm.

12. The boxing device according to any one of claims 1 to 11, **characterized in that** in the third direction (z), the bearing portion (31) has a width L2 ≥ 10 mm.

13. The boxing device according to any one of claims 1 to 12, **characterized in that** the article to be boxed (40) is a battery cell group comprising a plurality of battery cells (20), a first face (211) of each battery cell (20) faces the bearing portion (31), and an electrode terminal is provided on the first face (211); and
the bearing portion (31) is provided with an avoiding groove (311), and the electrode terminal is received in the avoiding groove (311).
